**Europäisches Patentamt**

(19) **European Patent Office**

**Office européen des brevets**

(11) Numéro de publication: **0 053 957**
**B1**

(12) # FASCICULE DE BREVET EUROPEEN

(45) Date de publication du fascicule du brevet:
**10.07.85**

(51) Int. Cl.⁴: **H 04 Q 3/52, H 04 B 9/00,**
**G 02 B 6/00**

(21) Numéro de dépôt: **81401785.1**

(22) Date de dépôt: **10.11.81**

(54) **Dispositif de commutation de faisceaux optiques, et central téléphonique comprenant un tel dispositif.**

(30) Priorité: **05.12.80 FR 8025910**

(43) Date de publication de la demande:
**16.06.82 Bulletin 82/24**

(45) Mention de la délivrance du brevet:
**10.07.85 Bulletin 85/28**

(84) Etats contractants désignés:
**DE GB IT NL SE**

(56) Documents cités:
**FR - A - 2 133 709**
**FR - A - 2 171 241**
**FR - A - 2 243 573**

**APPLIED PHYSICS LETTERS, vol. 29, no. 9, 1er**
**novembre 1976 NEW YORK (US) J.P. HUIGNARD et al.:**
**"High-sensitivity read-write volume halographic storage**
**in Bi12SiO20 and Bi12GeO20 crystals", pages 591/593.**
**Proc. Symp. Modern Optics, Microwave Res. Inst. Symp.**
**Series, Vol. XVII, N.J., March 67 H. Kogelnik**
**"Reconstructing response and efficiency of hologram**
**gratings" pp. 605-617**

(73) Titulaire: **THOMSON-CSF, 173, Boulevard Haussmann,**
**F-75379 Paris Cedex 08 (FR)**

(72) Inventeur: **Huignard, Jean-Pierre, THOMSON-CSF**
**SCPI 173, bld Haussmann, F-75360 Paris Cedex 08 (FR)**
Inventeur: **Leclerc, Pierre, THOMSON-CSF SCPI 173, bld**
**Haussmann, F-75360 Paris Cedex 08 (FR)**

(74) Mandataire: **Lepercque, Jean et al, THOMSON-CSF**
**SCPI 173, Bld Haussmann, F-75379 Paris Cedex 08 (FR)**

BUNDESDRUCKEREI BERLIN

**Description**

La présente invention se rapporte aux dispositifs de commutation électro-optiques que permettent de relier des organes photoémetteurs d'entrée à des organes photorécepteurs de sortie par des liaisons optiques modifiables sous l'action de signaux de commande électriques extérieurs. L'application de ces dispositifs à la commutation téléphonique permet d'obtenir un central téléphonique dans lequel la mise en relation des lignes d'abonnés s'effectue sans contact électrique mobile.

De nombreux dispositifs de commutation électro-optiques ont été réalisés dans le passé. Il est notamment connu d'utiliser une matrice de circuits d'entrée, délivrant des faiscaux parallèles, reliée optiquement à une matrice de circuits de sortie par l'intermédiaire d'une matrice d'hologrammes inscrits dans un milieu photosensible tel le manganèse-bismuth. La transmission vers un circuit de la matrice de sortie s'effectue lors de la lecture holographique par le faisceau incident provenant du circuit photoémetteur correspondant. Une inscription holographique préalable ayant été réalisé par interférence entre ce faisceau incident, et un deuxième faisceau. Ce deuxième faisceau, de par son orientation obtenue par déflexion, permet le choix du circuit photorécepteur dans la matrice des circuits de sortie.

Ainsi un document de l'art antérieur, à savoir le brevet français FR-A-2 243 573 décrit un dispositif de commutation de faisceaux optiques destiné à relier par voie optique au moins l'un des circuits d'un ensemble de circuits photoémetteur à au moins un circuit d'un ensemble de circuits photorécepteurs comprenant des moyens de déflexion du rayonnement émis par le circuit photoémetteur, ces moyens de déflexion permettant de diriger le rayonnement sur la partie active du circuit photorécepteur correspondant, ces moyens de déflexion consistant en un réseau de diffraction inscrit dans un milieu photosensible obentu par l'interférence de deux faiscaux lumineux. De plus suivant une variante divulguée dans ce brevet il est connue que les deux faisceaux lumineux, créant le résau de diffraction dans le milieu photosensible, ont une longueur d'onde différente de celle des faisceaux issus des circuits photoémetteurs.

En outre il est connu d'utiliser un milieu photosensible réalisé en oxyde de bismuth-silicium, et des circuits photoémetteurs constitués par les extrémités de guides de lumière contenus dans un cable.

La présente invention se rapporte à un dispositif d'une grande simplicité de mise en oeuvre. Notamment il ne nécessite pas de plans de barres-électrodes transparentes de part et d'autre du milieu photosensible pour sélectionner l'hologramme à enregistrer. L'inscription et la lecture holographique sont de plus d'une grande efficacité: peu d'énergie étant nécessaire et la perte d'insertion dans le milieu photosensible étant faible.

L'invention a pour objet un dispositif de commutation de faisceaux optiques destiné à relier par voie optique au moins l'un des circuits d'un ensemble de circuits photoémetteurs à au moins un circuit d'un ensemble de circuits photorécepteurs, comprenant des moyens de déflexion du rayonnement émis par le circuit photoémetteur rendu préalablement parallèle par un moyen de collimation, ces moyens de déflexion permettant de diriger le rayonnement sur la partie active du circuit photorécepteur correspondant, ces moyens de déflexion consistant en un réseau élémentaire de diffraction inscrit dans un milieu photosensible obtenu par l'interférence de deux faisceaux lumineux, les deux faisceaux lumineux créant ce réseau élémentaire de diffraction dans le milieu photosensible ayant une longueur d'onde différente de celle des faiscaux issus des circuits photoémetteurs, caractérisé en ce que la longueur d'onde du rayonnement émis par le circuit photoémetteur n'est pas située dans le domaine de sensibilité spectrale du milieu photosensible, dans lequel ce réseau élémentaire de diffraction est un réseau tridimensionnel de franges, étant continûment recyclable et en ce que les faisceaux lumineux permettant l'inscription des réseau d'hologrammes sont des faisceaux de rayons parallèles issus d'un même faisceau de rayons parallèles scindé par passage dans un séparateur de faisceaux, ces deux faisceaux ainsi obtenus traversant alors, chacun, deux systèmes de déflexion ne comportant pas de matrice d'obturoteurs avant d'aller interférer en un point dans le milieu photosensible pour former ce réseau élémentaire de diffraction.

L'invention a aussi pour objet un central téléphonique automatique utilisant un tel dipositif de commutation.

L'invention sera mieux comprise au moyen de la description que suit et des figures annexées parmi lesquelles:

  —la figure 1 illustre un état de l'art connu;

  —les figures 2 et 3 illustrent un schéma partiel du dispositif suivant l'invention;

  —la figure 4 illustre un autre schéma partiel du dispositif suivant l'invention;

  —la figure 5 illustre un aspect particulier du dispositif selon l'invention;

  —la figure 6 illustre une réalisation du dispositif selon l'invention;

  —les figures 7 et 8 illustrent deux aspects particuliers du dispositif selon l'invention.

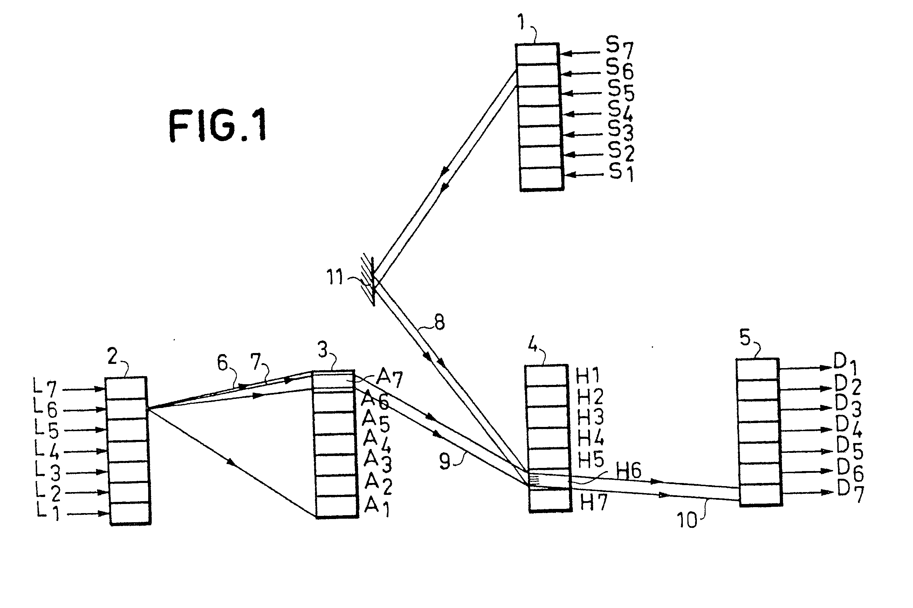

La figure 1 représente un dispositif de l'art antérieur. Les éléments constitutifs sont des matrices de circuits optiques. La matrice d'entrée 1 fournit des faisceaux sources défléchis pour aller se réfléchir sur le miroir 11 et atteindre ainsi la matrice d'hologrammes 4 en un endroit donné. Cette matrice d'hologrammes est réalisée par inscriptions dans un matériau photosensible. Considérons par exemple le faisceau 8 issu de la source principale S6, il atteint le milieu photosensible en H6.

La matrice 2 fournit de façon synchrone à la matrice 1 des faisceaux sources auxilliaires qui vont permettre l'inscription holographique après avoir traversé une matrice d'obturateurs 3. Ainsi la matrice 2 émet un faisceau 6 qui éclaire la matrice d'obturateurs 3 sur toute sa surface. Ce faisceau, dans notre cas, provient de la source auxiliaire L6. Seule une partie 9 de ce faisceau émerge de la matrice d'obturateurs pour atteindre la matrice d'hologrammes en H6 et ainsi interférer avec le faisceau 8. Les matrices 1 et 2 sont donc éclairées de façon synchrone. Pour que les faisceaux atteignent les mêmes endroits de la matrice d'hologrammes, les matrices 2 et 4 sont conjuguées optiquement, il en est bien évidemment de même des matrices 1 et 4. La matrice d'obturateurs 3 est conjuguée avec la matrice de sortie 5; le choix de l'obturateur permet ainsi de sélectionner le circuit photorécepteur de sortie. Ainsi dans un premier temps, il y a inscription holographique grâce aux faisceaux incidents 8 et 9. Dans un second temps on supprime le faisceau 9 en fermant l'obturateur A7. Le faisceau 8 joue donc le rôle de faisceau référence et par diffraction on obtient un faisceau émergent que atteint la matrice des circuits de sortie sur le circuit D7, conjugué de l'obturateur A7 sélectionné précédemment. Si on considère des matrices (lignes, colonnes), les matrices 1, 2 et 4 sont des matrices (m, n) et les matrices 3 et 5 des matrices (p, q).

Ce système présente plusieurs inconvénients: le faisceau utile éclairant la matrice d'obturateurs se réduit finalemment au faisceau 7 d'où un mauvais rendement énergétique. De plus deux cycles sont nécessaires au fonctionnement de ce dispositif: un cycle d'inscription holographique et un cycle de lecture holographique.

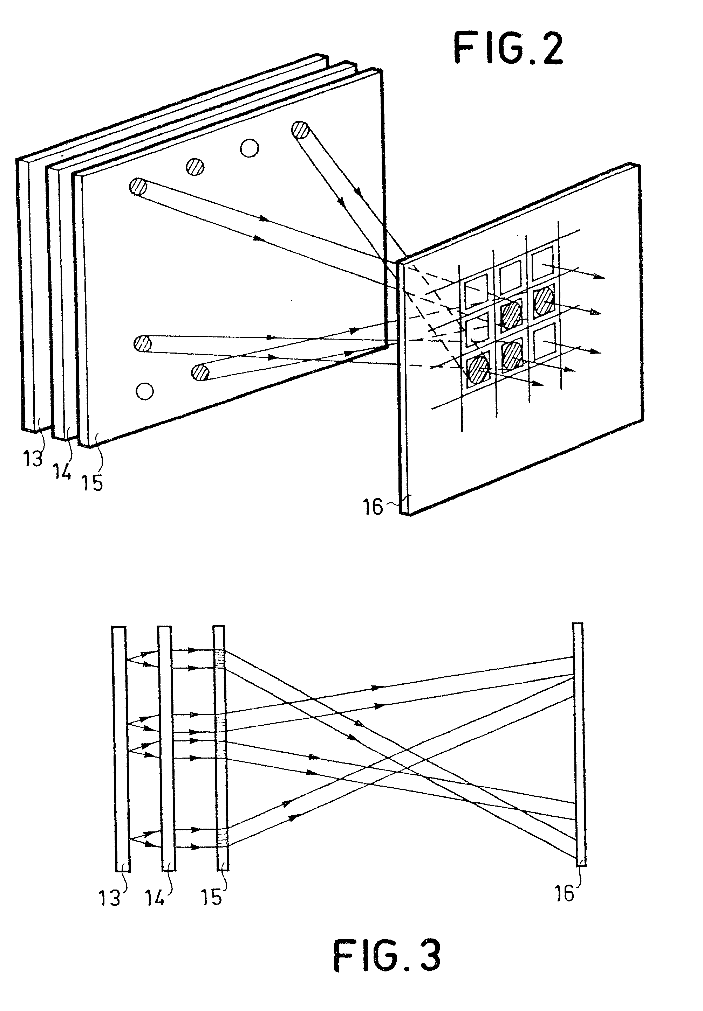

Sur les figures 2 et 3 nous considérons différentes matrices de circuits. Les faisceaux lumineux issus de la matrice 13 des circuits photoémetteurs sont rendus parallèles par passage à travers une matrice de microlentilles 14. Ces faisceaux alors diffractent sur des strates inscrites dans le milieu 15 pour atteindre différents circuits de la matrice 16 de circuits photorécepteurs. Ces strates, sont inscrites dans un milieu photosensible épais, ce sont des plans parallèles au plan bissecteur des surfaces d'ondes incidentes qui permettent, par interférence, leur inscription dans ce milieu. Il y a matérialisation d'une sorte de »store vénitien« fait de strates équidistantes. Dans notre cas, ce milieu photosensible électro-optique. C'est un milieu continûment recyclable. Ce peut être par exemple un milieu à haut rendement de type oxyde de bismuth-silicium (BSO).

La longueur d'onde des faisceaux provenant des circuits photoémetteurs n'est pas située dans le domaine de sensibilité spectrale du milieu, elle est située par exemple dans le domaine infra-rouge. Ainsi la matrice d'émission 13 est constituée d'un résau de m x x sources lumineuses modulables, collimatées à l'aide d'un résau 14 de microlentilles ou de fibres focalisantes de type à gradient d'indice par exemple. Les faisceaux ainsi générés sont placés en regard d'une plaquette 15 de matériau BSO servant de support à l'enregistrement de réseaux de phase de pas et d'orientation convenables. Ces réseaux sont inscriptibles et effaçables. La lecture du réseau n'étant pas destructrice aux longueurs d'onde considérées, le faisceau incident est donc défléchi vers l'adresse désirée, et lu sur une matrice de photodétecteurs. On établit ainsi la liaison optique entre deux abonnés. L'intérêt essentiel du dispositif tient à la possibilité de »croiser« dans l'espace tous les faisceaux lumineux se propageant indépendamment entre tous les points des matrices d'entrée 13 et de sortie 16.

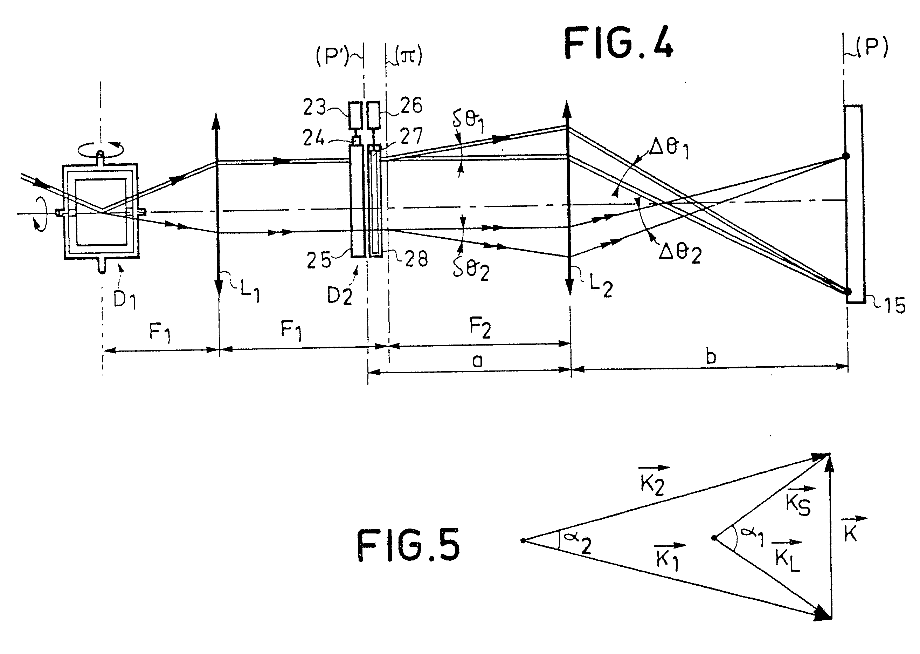

L'inscription des strates que permettent d'assurer la commutation entre deux abonnés quelconques est réalisé à l'aide de deux faisceaux issus par exemple d'un laser He-Cd. Chaque faisceau est obtenu à l'aide d'un dispositif identique à celui de la figure 4. Puisque le matériau photosensible utilisé est épais, le changement de longueur d'onde entre l'inscription et la lecture oblige un positionnement des faisceaux d'enregistrement sous les incidences particulières. Ceci permet d'assurer, à la lecture, la déflexion du faisceau vers le circuit voulu de la matrice de sortie. Ce dispositif assurant l'inscription du réseau de strates est donc schématisé sur la figure 4. Ce dispositif comporte un double système de déflexion XY sont la fonction est la suivante:

— le premier déflecteur $D_1$ choisit dans le plan de commutation un point quelconque;
— le second déflecteur $D_2$ positionne le faisceau avec l'incidence requise sur le cristal BSO 15. Ce faiscau pivote autour d'un point sélectionné dans le plan du cristal. Le déflecteur $D_2$ est de grande dimension, car il doit accepter le champ angulaire du premier déviateur. La lentille $L_2$ image le plan moyen P' du déflecteur sur le plan P' du milieu photosensible; ainsi

$$\frac{1}{a} + \frac{1}{b} = \frac{1}{f2}.$$

Les déviateurs $D_1$ sont, à titre d'exemple non limitatif, constitués par des miroirs galvanométrique fonctionnant en accès aléatoire dans les deux directions X—Y. Chaque bloc de déflexion $D_1$ peut être numi d'un dispositif optique assurant la conjugaison des déflecteurs X et Y.

Ainsi on peut considérer à titre d'exemple non limitatif pour le déflecteur $D_1$ un miroir monté »à la Cardan«. Le point de pivotement de ce miroir est situé sur foyer de la lentille $L_1$. On obtient ainsi un ensemble de faisceaux de directions parallèles à l'axe optique.

Sur la figure 4 on considère des pinceaux parallèles. Ce que n'est pas tout à fait exact, mais en première approximation, ceci est vrai. La répartition d'un pinceau lumineux issu d'un laser est une fonction gaussienne, mais les lentilles permettent de compenser les divergences des faisceaux.

Pour le déflecteur $D_2$ on peut considérer à titre d'exemple non limitatif deux déflecteurs acousto-optiques successifs l'un agissant suivant l'axe vertical et l'autre suivant l'axe horizontal dans un plan perpendiculaire à l'axe optique.

La propagation dans le milieu 25 d'une onde acoustique générée par le transducteur 24 attaqué lui-même par un signal provenant du générateur 23 se traduit sur l'indice optique de ce milieu par une perturbation ondulatoire synchrone.

A une onde progressive de fréquence correspond d'un point de vue optique un réseau de phase dont le pas est égal à $\varLambda = \frac{v}{F}$, et dont la figure de diffraction permet de controler par l'intermédiaire de la fréquences F, la direction de propagation de l'onde incidente en interférence avec lui.

Ainsi à chaque valeur de $\varLambda$, donc de la fréquence appliquée au transducteur électroacoustic 24, correspond une déviation de la partie diffractée du pinceau lumineux.

A cette première déviation suivant l'axe vertical succède une seconde déviation suivant l'axe horizontal. Elle est obtenue grâce à la propagation dans le milieu 28 d'une acoustique générée par le transducteur 27 attaqué lui-même par un signal provenant du générateur 26. Le fonctionnement de ce deuxième déviateur, est analogue à celui du premier.

Pour avoir un plan P' rigoureusement défini on peut considérer que ces deux déviateurs sont imagés l'un par rapport à l'autre par un système imageur intermédiaire.

Le fait que ce plan P' ne soit pas tout à fait confondu avec le plan $\pi$, plan focal de $L_2$ entraine une légère erreur. Cette erreur est négligeable car les déviations $\delta\varPhi$ sont faibles. En effet le milieu 15 est un milieu qui amplifie la déviation des faisceaux, la lecture et l'écriture se faisant à des longueurs d'ondes différentes. On peut à titre d'exemple non limitatif effectuer l'écriture en lumière visible et la lecture en infra-rouge. Ainsi au vecteur d'onde résultant $\vec{K}$ correspondant aux strates créées dans le milieu 15 vont correspondre à l'inscription des vecteurs d'onde $\vec{K}_1$ et $\vec{K}_2$ des fronts d'onde plans que interfèrent avec: $\vec{K} = \vec{K}_2 - \vec{K}_1$.

A laecture, au vecteur d'onde $\vec{K}_L$ du faisceau de lecture va donc correspondre un faisceau de sortie dévié tel que $\vec{K}_s = \vec{K}_L + \vec{K}$.

Or $|\vec{K}| = \frac{2\pi f}{C}$, ainsi l'angle $\alpha$ est plus grand que l'angle $\alpha_2$ si la fréquence du faisceau de lecture est plus faible que celle des faiscaux que ont réalisé l'inscription, $\alpha_1$ et $\alpha_2$ étant représentés à la figure 5.

Ainsi les faisceaux déviés par $D_2$ suivant des angles $\delta\varPhi$, convergent dans le plan P suivant des angles $\varDelta\varPhi$; les plans P et P' étant conjugués.

Les fronts d'onde des faisceaux que convergent sont plan, aussi les strates sont parallèles.

Ces deux systèmes déflecteurs $D_1$ et $D_2$ permettent ainsi d'atteindre les différent points du milieu 15 suivant des orientations particulières.

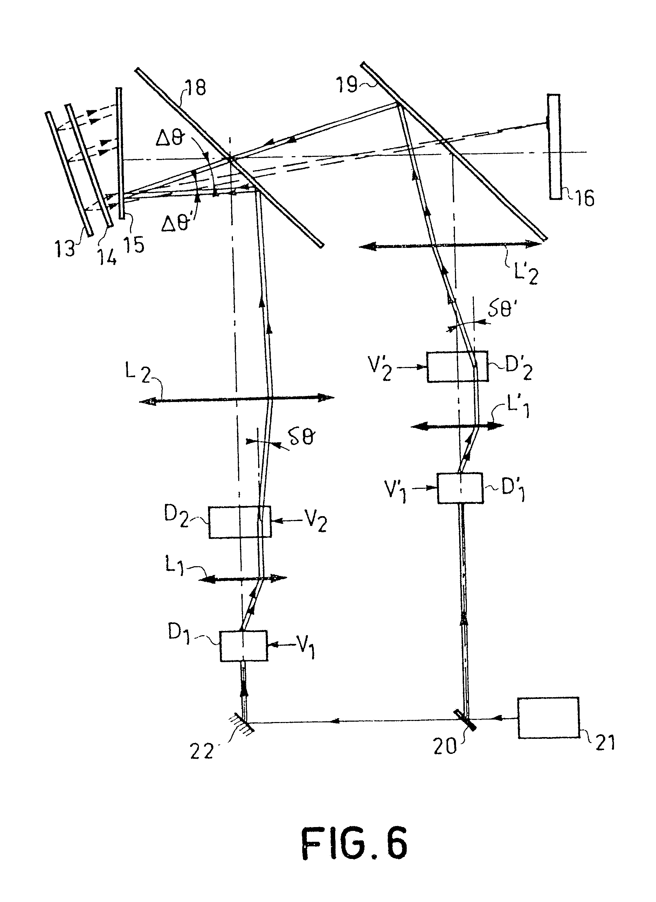

L'association de deux dispositifs de ce type assure la génération d'un réseau de strates de pas et d'orientation convenables pour défléchir le faisceau de lecture vers l'abonné sélectionné. Ces deux dispositifs peuvent être disposés selon le schéma de la figure 6 pour la génération des deux faisceaux interférant dans le cristal BSO. Cette interférence se produit dans un milieu à trois dimensions. Les caractéristiques physiques de ce milieu et en particulier l'indice de réfraction, sont modulés spatialement par un réseau de franges dues à l'interférences de ces deux faisceaux incidents. Du fait de cette modulation spatiale que induit par gradient un réseau de strates, tout faisceau issu de la matrice des circuits photoémetteurs va être diffracté dans une direction choisie. Les deux faisceaux d'inscription sont issus d'une même source 21 que peut être un laser HE-Cd, par exemple, après traversée d'un séparateur de faisceau 20.

Les tensions d'adressage $V_1$ et $V'_1$ sur les deux déflecteurs $D_1$ et $D'_1$ sont égales: elles permettent de diriger les faisceaux d'inscription en un point donné du cristal BSO 15. Les signaux d'adressage $V_2$ et $V'_2$ sur les déflecteurs $D_2$ et $D'_2$ sont calculés pour que le réseau photoinduit soit sous incidence Bragg à la longueur d'onde le lecture. La commande individuelle des angles $\delta\varPhi$ et $\delta\varPhi$ permet donc de générer un réseau quelconque en faisant varier son pas et l'orientation moyenne des strates diffractantes. Les miroirs dichroïques permettent de ne réfléchir que les faisceaux d'inscription de longueur d'onde connue, et de transmettre les autres faisceaux.

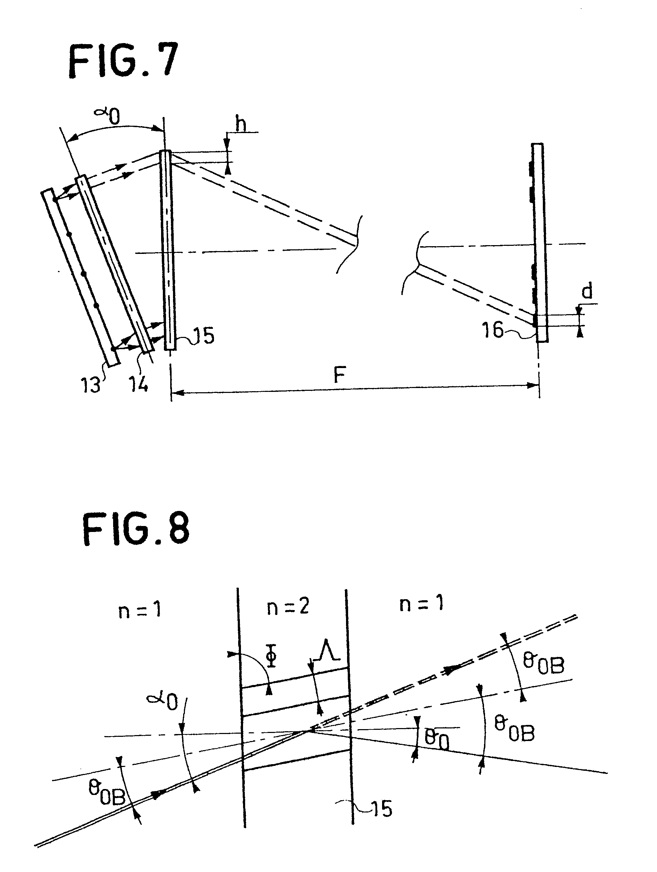

Les caractéristiques de ce dispositif seront étudiées à l'aide des figures 7 et 8. Sur la figure 7 le réseau de m × n sources lumineuses est collimaté par un réseau de m × n microlentilles. Ces faisceaux sont placés sous incidence oblique $\alpha_0$ afin que la partie non diffractée de l'onde incidente soit située en dehors du champ des circuits photorécepteurs qui peuvent être, par exemple, des photodiodes. Le diamètre de la tache de diffraction doit être inférieur au pas de la matrice des circuits photorécepteurs. Si par approximation on considère la tache centrale d'une figure de diffraction obtenue avec une source ponctuelle et une fente rectangulaire on a la formule:

$$h = \frac{\lambda F}{d},$$

$\lambda$ est la longueur d'onde des faisceaux provenant de la matrice des circuits photoémetteurs, F est la distance entre le plan du réseau de strates et le plan des circuits photorécepteurs, d est la largeur de la tache de diffraction dans le plan des circuits photorécepteurs et h la largeur des strates utiles pour la diffraction des faisceaux incidents dans le milieu photosensible.

F étant égal à 600 millimètre, d à 0,9 micromètre, on obtient h égal à 540 micromètres.

A titre d'exemple on peut alors considérer une mosaïque de $100 \times 100$ photodétecteurs au pas de 1,2 millimètres. A l'aide de la figure 8 nous pouvons alors calculer les conditions d'inscription du réseau permettant la déflexion angulaire. Le réseau est sous incidence de Bragg pour la longueur d'onde de faisceaux issus des microlentilles. Dans le milieu d'indice n nous avons les formules suivantes:

$$2\theta_B = \alpha + \theta; \sin\theta_B = \frac{1}{2}\frac{\lambda R}{\Lambda}$$

$$\Phi = \frac{\pi}{2} - \alpha + \theta_B$$

Dans l'air les formules sont les suivantes:

$$\sin\theta_{oB} = \frac{1}{2}\frac{\lambda_o R}{\Lambda} \text{ et } \lambda_o R = n\lambda R$$

pour la définition de ces angles il suffit de se reporter à la figure 8.

$\lambda R$ est la longueur d'onde de lecture dans le milieu n, et $\lambda_o R$ dans l'air.

Si on conserve la même valeur pour la longueur d'onde: $\lambda_o R = 0,9$ micromètre, $\theta_o = 0,2$ rd, $\alpha_o = 0,5$ rd, $n = 2$, on obtient une incidence de Bragg de l'onde de lecture: dans l'air $\theta_{oB} = 0,35$ rd, dans le milieu d'indice n $\theta_B = 0,175$ rd; un angle d'inclinaison des strates $\theta = \pi/2 - 1$ avec un pas de strates de 1,3 micromètre.

En ce qui concerne les faisceaux d'enregistrement à la longueur d'onde $\lambda_{oB} = 0,45$ micromètre on a une incidence de Bragg de $\theta_{oB} = 0,175$ rd. On considère à titre d'exemple une matrice démetteurs de $100 \times 100$ millimètres, la matrice de récepteurs étant de $120 \times 100 \times 2$ millimètres.

Le temps d'inscriptions et d'effacement du réseau photoinduit dans le cristal est inférieur à la milliseconde. L'efficacité de diffraction du réseau photoinduit est de $2 \times 10^{-3}$.

Les calculs effectués montrent que l'inscriptions que l'inscription de tous les réseaux est possible avec des miroirs galvanométriques disponibles dans le commerce. La dimension des miroirs est d'environ $60 \times 60$ millimètres. L'angle de défléxion maximum à la sortie des déflecteurs acousto-optique est de 25°.

De tels dispositifs possèdent un temps d'accès aléatoire inférieur à 10 millisecondes par point. L'inscription des réseaux photoinduits par création du champ de charge d'espace dans le matériau BSO est effectuée à champ nul par diffusion ou par application d'un champ électrique transverse généré par un peigne interdigité par exemple.

Ainsi le dispositif proposé assure la commutation spatiale de $10^4$ abonnés, en un temps inférieur à 10 millisecondes quelque soit l'abonné considéré dans la matrice des sources lumineuses.

A titre d'exemple, les photoémetteurs peuvent être des fibres optiques; les photorécepteurs des fibres optiques; et le milieu photosensible une lame monicristalline de BSO. On peut d'ailleurs utiliser le même nombre de circuits photoémetteurs et de circuits photorécepteurs.

## Revendications

1. Dispositif de commutation de faisceaux optiques destiné à relier par voie optique au moins l'un des circuits d'un ensemble de circuits photoémetteurs (13) à au moins un circuit d'un ensemble de circuits photorécepteurs (16), comprenant des moyens de déflexion du rayonnement émis par le circuit photoémetteur rendu préalablement parallèle par un moyen de collimation (14), ces moyens de déflexion permettant de diriger le rayonnement sur la partie active du circuit photorécepteur correspondant, ces moyens de déflexion consistant en un réseau élémentaire de diffraction inscrit dans un milieu photosensible (15) obtenu par l'interférence de deux faisceaux lumineux, les deux faisceaux lumineux créant ce réseau élémentaire de diffraction dans le milieu photosensible ayant une longueur d'onde différente de celle des faisceaux issus des circuits photoémetteurs, caractérisé en ce que la longueur d'onde du rayonnement émis par le circuit photoémetteur n'est pas située dans le domaine de sensibilité spectrale du milieu photosensible (15), ce milieu photosensible (15), dans lequel ce réseau élémentaire de diffraction est un réseau tridimensionnel de franges, étant continûment recyclable et en ce que les faisceaux lumineux permettant l'inscription des réseaux d'hologrammes sont des faisceaux de rayons parallèles issus d'un même faisceau de rayons parallèles (21) scindé par passage dans un séparateur de faisceaux (20), ces deux faisceaux ainsi obtenus transversant alors, chacun, deux systèmes de déflexion ne comportant pas de matrice d'obturateurs avant d'aller interférer en un point dans le milieu photosensible (15) pour former ce réseau élémentaire de diffraction.

2. Dispositif selon la revendication 1, caractérisé en ce que les circuits photoémetteurs sont disposés selon une matrice.

3. Dispositif selon la revendication 2, caractérisé en ce que les moyens de collimation (14) sont des lentilles disposées en matrice, cette matrice étant disposée devant la matrice (13) des circuits photoémetteurs.

4. Dispositif selon la revendication 3, caractérisé, en ce que les lentilles sont des tronçons de fibres à gradient d'indice.

5. Dispositif selon la revendication 1, caractérisé en ce que le premier système de déflexion ($D_1$ et $D'_1$) est composé d'un moroir monté »à la Cardan«.

6. Dispositif selon la revendication 1, caractérisé en ce que le deuxième système de déflexion ($D_2$ et $D'_2$) est constitué de deux déflecteurs acousto-optiques agissant deux directions perpendiculaires du plan perpendiculaire à l'axe optique.

7. Dispositif selon l'une quelconque des revendications précédentes, caractérisé en ce que les circuits photoémetteurs sont des fibres optiques.

8. Dispositif selon l'une quelquonque des revendications précédentes, caractérisé en ce que les circuits photorécepteurs sont des fibres optiques.

9. Dispositif selon quelconque des revendication précédentes, carctérisé en ce que le milieu photosensible (15) est une lame monocristalline d'oxyde de bismuth-silicium.

10. Dispositif selon l'une quelconque des revendications précédentes, caractérisé en ce qu'il comprend le même nombre de circuits photoémetteurs et de circuits photorécepteurs.

11. Central téléphonique automatique, caractérisé en ce qu'il comprend au moins un dispositif de commutation tel que décrit suivant l'une quelqonque des revendications 1 à 10.

## Patentansprüche

1. Vorrichtung zur Umschaltung von optischen Bündeln, welche dazu bestimmt ist, auf optischem Wege wenigstens einen der Kreise einer Menge von Lichtsendekreisen (13) mit wenigstens einem Kreis einer Menge von Lichtempfängerkreisen (16) zu verbinden, mit einer Einrichtung zur Umlenkung der von dem Lichtsendekreis ausgehenden Strahlung, die zuvor durch eine Kollimatoreinrichtung (14) parallel gerichtet wurde, wobei diese Ablenkmittel gestatten, die Strahlung auf den aktiven Teil des entsprechenden Fotoempfängerkreises zu richten, wobei diese Ablenkmittel aus einem elementaren Beugungsgitter gebildet sind, welches in ein fotoempfindliches Medium (15) eingeschrieben ist und durch Interferenz von zwei Lichtbündeln erhalten wurde, wobei diese zwei Lichtbündel, die dieses elementare Beugungsgitter in dem fotoempfindlichen Medium erzeugen, eine Wellenlänge aufweisen, die verschieden von der der Bündel ist, welche von den Lichtsendekreisen ausgehen, dadurch gekennzeichnet, daß die Wellenlänge der von dem Lichtsendekreis abgegebenen Strahlung nicht innerhalb des Gebietes der spektralen Empfindlichkeit des fotoempfindlichen Mediums (15) liegt, wobei dieses fotoempfindliche Medium (15), in welchem das elementare Beugungsgitter ein dreidimensionales Schlierengitter ist, kontinuierlich und zyklisch wiederhergestellt wird, und daß die Lichtbündel, welche das Einschreiben der Hologrammgitter gestatten, Bündel aus parallelen Strahlen sind, die von demselben Bündel parallelere Strahlen (21) ausgehen, welches in einem Strahlteiler (20) aufgespalten wurde, wobei diese zwei so erhaltenen Bündel dann jeweils zwei Ablenksysteme durchlaufen, die keine Verschlußmatrix umfassen, bevor sie an einem Punkte in dem fotoempfindlichen Medium (15) interferieren, um dieses elementare Beugungsgitter zu erzeugen.

2. Vorrichtung nach Anspruch 1, dadurch gekennzeichnet, daß die Lichtsendekreise matrixförmig angeordnet sind.

3. Vorrichtung nach Anspruch 2, dadurch gekennzeichnet, daß die Kollimatormittel (14) matrixförmig angeordnete Linsen sind, wobei diese Matrix von der Matrix (13) der Lichtsendekreise angeordnet ist.

4. Vorrichtung nach Anspruch 3, dadurch gekennzeichnet, daß die Linsen Faserabschnitte mit Brechungsindexgradient sind.

5. Vorrichtung nach Anspruch 1, dadurch gekennzeichnet, daß das erste Ablenksystem ($D_1$ und $D'_1$) aus einem Spiegel mit kardanischer Aufhängung gebildet ist.

6. Vorrichtung nach Anspruch 1, dadurch gekennzeichnet, daß das zweite Ablenksystem ($D_2$ und $D'_2$) aus zwei akusto-optischen Ablenkern gebildet ist, welche in zwei Richtungen wirken, die senkrecht zu einer zur optischen Achse senkrechten Ebene sind.

7. Vorrichtung nach einem der vorstehenden Ansprüche, dadurch gekennzeichnet, daß die Lichtsendekreise optische Fasern sind.

8. Vorrichtung nach einem der vorstehenden Ansprüche, dadurch gekennzeichnet, daß die Lichtempfängerkreise optische Fasern sind.

9. Vorrichtung nach einem der vorstehenden Ansprüche, dadurch gekennzeichnet, daß das fotoempfindliche Medium (15) eine monokristalline Scheibe aus Wismuth-Silizium-Oxid ist.

10. Vorrichtung nach einem der vorstehenden Ansprüche, dadurch gekennzeichnet, daß sie dieselbe Anzahl von Lichtsendekreisen wie von Lichtempfängerkreisen enthält.

11. Automatische Telefonzentrale, dadurch gekennzeichnet, daß daß sie wenigstens eine Umschaltvorrichtung enthält, wie sie in einem der Ansprüche 1 bis 10 angegeben ist.

## Claims

1. Device for the switching of optical beams for optically connecting at least one of the circuits of a set of phototransmitter circuits (13) to at least one circuit of a set of photoreceiver circuits (16), comprising means for the deflection of the radiation transmitted from the phototransmitter circuit and which has been previously collimated by collimated means (14), these deflection means permitting to direct the radiation onto the active part of the corresponding photoreceiver circuit, these deflection means consisting in an elementary diffraction grating recorded in a photosensitive medium (15) an obtained by interference to two light beams, these two light beams generating this elementary diffraction gratin within the photosensitive medium having a wavelength different from that of the beams originating from the phototransmitter circuits, characterized in that the wavelength of the radiation transmitted by the phototransmitter circuit lies outside of the spectral sensitivity range of the photosensitive medium (15), this photosensitive medium (15) wherein this elementary diffraction grating is a three-dimensional grating of fringes, being adapted to be continuously recycled, and in that the light beams vor recording these hologram gratings are parallel radiation beams originating from the same parallel radiation beam (21) divided by passing through a beam splitter (20), the thus obtained two beams subsequently each crossing two deflection systems not comprising a shutter matrix prior to interfering at a point within the photosensitive medium (15) to form this elementary diffraction grating.

2. Device according to claim 1, characterized in that the phototransmitter circuits are arranged in accordance with a matrix.

3. Device according to claim 2, characterized in that the collimation means (14) are lenses arranged in accordance with a matrix, this matrix being arranged in front ot the matrix (13) of the phototransmitter circuits.

4. Device according to claim 3, characterized in that the lenses are sections of index gradient fibers.

5. Device according to claim 1, characterized in that the first deflection system ($D_1$ and $D'_1$) is composed of a mirror with a cardanic mount.

6. Device according to claim 1, characterized in that the second deflection system ($D_2$ and $D'_2$) is formed of two acousto-optical deflectors acting in two directions perpendicular to the normal plane to the optical axis.

7. Device according to any of the preceding claims, characterized in that the phototransmitter circuits are optical fibers.

8. Device according to any of the preceding claims, characterized in that the photoreceiver circuits are optical fibers.

9. Device according to any of the preceding claims, characterized in that the photosensitive medium (15) is a monocrystalline sheet of bismuth-silicon oxide.

10. Device according to any of the preceding claims, characterized in that it comprises the same number of phototransmitter circuits and photoreceiver circuits.

11. Automatic telephone exchange, characterized in that it comprises at least one switching device such as defined in any of claims 1 to 10.

FIG.1

# FIG.2

13  14  15

16

# FIG.3

13  14  15  16

# FIG.4

(P') (π) (P)

23 — 26
24 — 27
25 28
D2
δθ₁
δθ₂
Δθ₁
Δθ₂
L₂
15
D₁
L₁
F₁  F₁  F₂
a
b

0 053 957

# FIG.5

$\vec{K_2}$  $\vec{K_1}$  $\vec{K_S}$  $\vec{K_L}$  $\vec{K}$  $\alpha_2$  $\alpha_1$

FIG.6

# FIG.7

# FIG.8